# EUROPÄISCHE PATENTSCHRIFT

(11) **EP 0 423 774 B1**
(45) Veröffentlichungstag und Bekanntmachung des Hinweises auf die Patenterteilung: **06.04.1994**
(21) Anmeldenummer: 90119939.8
(22) Anmeldetag: 17.10.1990
(51) Int. Cl.: B05C 5/02, B05C 5/04, B05C 9/04, B05C 9/06, B05C 9/12, B29C 43/24, B29C 41/28, B29C 35/04

(54) **Anlage zur Beschichtung bahnförmiger Trägermaterialien oder zur Herstellung trägerloser Bahnen**
Installation for coating webs or for making carrierless webs
Installation pour le revêtement de bandes ou pour la fabrication de bandes sans support

(30) Priorität: 20.10.1989 DE 3935059
(43) Veröffentlichungstag der Anmeldung: 24.04.1991
(73) Patentinhaber: Rümmer, Jürgen, D-96120 Bischberg (DE)
(72) Erfinder: Rümmer, Jürgen, D-96120 Bischberg (DE)
(74) Vertreter: Metzler, Jürgen, Dipl.-Ing.

(56) Entgegenhaltungen:
- EP-A- 0 103 954
- GB-A- 600 685
- GB-A- 2 159 066

## Beschreibung

Die Erfindung betrifft eine Anlage zur ein- oder mehrfachen Unter- und/oder Oberbeschichtung bahnförmiger Tragermaterialien oder zur Herstellung trägerloser Bahnen mit bzw. aus einer oder mehreren Deckmassen, wie Bitumen, ggf. mit Aufbringung eines Bestreuungsmaterials, wie Schiefergranulat, Quarzsand, Talkum usw., und wahlweiser Abdeckung mit Folien oder dgl.

Bahnenförmiges, beschichtetes Material wird in den verschiedensten technischen Bereichen benötigt. Großer Bedarf besteht beispielsweise bei mit Bitumenmasse beschichteten Dachbahnen, wobei hier mehr und mehr Bahnen eingesetzt werden, die ein leichtes Verlegen dadurch ermöglichen, daß eine vor dem Verlegen aktivierte Kleberschicht den Klebevorgang wesentlich erleichtert. Bei diesen Dachbahnen ist auf der oberen Deckmassenschicht auch eine Schicht mit einem Streumaterial, wie Schiefergranulat, angeordnet, die das Deckbitumen bei Sonneneinstrahlung schützen soll, da der Kunststoff und die Massen nicht UV-stabil sind. Neben Dachbahnen gibt es eine Reihe weiterer Anwendungsmöglichkeiten von beschichtetem Material, sei es zum Isolieren auf dem Bau, im Kraftfahrzeug zur Isolierung der Karosserie usw.

Bei der Herstellung derartiger Bahnen ist es bekannt, diese im rohen oder vorimprägnierten, d.h. mit Imprägnierflüssigkeit, wie dünnflüssigem Bitumen, getränkten, Zustand waagerecht - oder früher auch senkrecht - zu beschichten. Dabei wird über eine Auftragswalze von unten bzw. über ein Tauchsystem von unten und oben Bitumendeckmasse im Überschuß an den Träger angetragen und über zwei Kalibrierwalzen abgestreift und auf die gewünschte Produktdicke gebracht. Es sind auch Vorrichtungen bekannt, bei denen die Bitumenmasse von oben über entsprechenden Verteilungen zugeführt und auf die Oberseite des Trägermaterials aufgegeben werden. Der Überschuß lauft in eine beheizte Pfanne und bei waagerechtem Durchzug des Trägermaterials trägt eine Schöpfwalze das Bitumen von unten an den Träger an. Der Massenüberschuß läuft über ein in der Höhe einstellbares Wehr und wird von dort in das jeweilige Rührwerk zurückgepumpt. Bei den bekannten Vorrichtungen wird mit großen Pfannen mit einem Inhalt von ca. 1000 l gearbeitet, so daß bei einem Massenwechsel erhebliche Verluste entstehen und für das Beheizen der Pfannen sehr viel Energie benötigt wird. Für das Rückpumpen des Massenüberschusses, der natürlich auch erheblich ist, werden große Pumpen eingesetzt.

Ein weiterer Nachteil bei bekannten Anlagen und Vorrichtungen besteht darin, daß die Einlage nicht exakt gesteuert werden kann, also die Menge an Bitumen, die auf die Ober- und Unterseite aufgetragen werden soll, nicht genau bestimmbar ist. Die Messung des Produktes, also die Ermittlung der Dicke des Endprodukts, ist unmittelbar nach der Beschichtung nicht möglich, da das Produkt in diesem Bereich nicht geführt ist und frei durchhängt. Der Träger "schwimmt" gewissermaßen zwischen der aufgebrachten Unter- und Oberbeschichtung, so daß kein definierter Abstand nach oben und unten einstellbar ist. Durch das Durchhängen und insbesondere nach dem Aufgeben von Bestreuungsmaterialien auf die Oberseite kommt es zu einem extremen Durchhang, der wesentliche Spannungen erzeugt, die wiederum zu Schrumpfung, besonders bei thermoplastischen Trägern, führen. Da die unmittelbare Messung nach dem Aufbringen der Deckmassenbeschichtung auf das Trägermaterial nicht machbar ist, kann zu diesem Zeitpunkt auch keine Korrektur durchgeführt werden, so daß die Qualität des Produkts leidet. Es gehen auch Rohstoffe verloren. Ist die Deckmassenbeschichtung zu dick, bedeutet dies einen Verlust für den Hersteller. Bei zu geringer Deckmassendicke ergibt sich Ausschuß.

Zwar werden bei bekannten senkrechten Zieheinrichtungen bessere Oberflächenbeschaffenheiten des Produkts erreicht, aber die obengenannten Nachteile treten ebenfalls auf. Nachteilig bei den bekannten Vorrichtungen ist auch, daß dann, wenn auf die Produktunter- oder -oberseite eine Folie aufkaschiert werden soll, dies nur mit erheblichen Lufteinschlüssen möglich ist, da diese Folien sofort undefinierbar festkleben und Luft mit einschließen, die dann zu unerwünschten Luftblasen führt. Auch müssen relativ dicke Folien verwendet werden, da die Massen durch die Modifizierung und den Fülleranteil mit relativ hohen Temperaturen von ca. 160 bis 180° C verarbeitet werden müssen und dünne Folien sehr schnell schmelzen. Es kommt dann zu Störungen an der Maschine, weil das heiße Bitumen mit den übrigen Maschineneinrichtungen verklebt. Weiterhin ist besonders eine mehrfache Beschichtung schwierig und nur schlecht beherrschbar, weil in diesem Fall mehrere dieser großen Pfannen hintereinander eingesetzt werden müssen. Bei den bekannten Einrichtungen muß die auf die Oberseite des Trägers aufgegebene Bitumenmasse mit einem großen Überschuß vorgegeben werden. Dies hat zur Folge, daß sich die Oberfläche des Bitumens teilweise abkühlt und es innerhalb der Kalibriereinrichtung zu unterschiedlich warmen Zonen kommt, die wiederum bewirken, daß die Gleichmäßigkeit der Beschichtung negativ beeinflußt wird, die Oberflächenbeschaffenheit unter Umständen darunter leidet und auch die Bestreuung unterschiedlich gut haftet, so daß es zu Streifenbildungen auf der Bestreuung kommt. Die Walzen erzeugen weiterhin strömungstechnisch unabhängig davon, ob sie stehen oder gegenläufig laufen, was natürlich wiederum zu einer verstärkten Belastung des Trägers führt, ein Aufziehen der heißen Bitumenmassen nach dem Kalibrieren. Bei den bekannten Einrichtungen erfolgt der Rücktransport der überschüssigen Bestreuungsmaterialien über Schwingförderer, Förderschnecken oder Förderbänder, die das Material zur Seite transportieren, das dann über Elevatoren hochgefördert und in den Bunker des Bestreuungssystems zurückgefördert wird. Diese Vorrichtungen erfordern einen hohen technischen Aufwand und großen Platzbedarf. Durch die hohe Abrasivität der verwendeten Materialien verschleißen diese Vorrichtungen in sehr kurzer Zeit. Insgesamt weisen also die bekannten Vorrichtungen wesentliche Nachteile auf, die eine qualitätsgerechte Herstellung und Beschichtung der Trägerbahnen verhindern.

Hinzu kommt, daß die Bedienung der bekannten Anlagen sehr kompliziert ist, so daß die Qualität der Erzeugnisse weitgehend auch von der Geschicklichkeit und dem Fachverstand der jeweiligen Bedienungsmannschaft abhängt. Bei den zum Stand der Technik gehörenden Ein- und Vorrichtungen ist auch die Produktionsvielfalt stark eingeschränkt. Besonders beim Einsatz von wärmeunstabilen Trägermaterialien zeigen sich sehr bald die Grenzen bei den angewandten Produktionsverfahren.

Bei einer weiteren bekannten Anlage kommt es zu einer Verklebung der Oberfläche; das Bitumen klebt an den Walzen an. Die Folie muß bei dieser bekannten Anlage mitlaufen, stellt jedoch nur Abfall dar. Die Masse übt bei niedrigerer Temperatur größere Belastungskräfte aus, was gleichfalls zu schlechteren Oberflächen führt. Der im Überschuß aufgebrachte Sand wird nicht weggebracht.

Die Aufgabe der Erfindung besteht darin, eine Einrichtung bzw. Anlage der im Oberbegriff des Anspruches 1 angegebenen Art insoweit zu verbessern, daß eine Vielfalt von im Aufbau unterschiedlichen bahnförmigen Erzeugnissen in verbesserter Qualität hergestellt werden kann. Die Anlage soll weitgehend automatisiert und bedienungsfreundlich sein. Die Dicke der auf den Träger aufgebrachten Deckschichten soll exakt einstell- und definierbar sowie jederzeit korrigierbar sein. Die Anlage soll einfach im Aufbau und leicht bedarfsgerecht nachrüstbar sein. Die weiter oben bei bekannten Einrichtungen auftretenden Nachteile sollen vermieden werden. Mit der Anlage sollen nicht nur Beschichtungen auf Trägermaterialien vorgenommen werden können, sondern es soll auch die Herstellung trägerloser Produkte in beliebiger Dicke möglich sein.

Diese Aufgabe wird bei der Erfindung durch die im kennzeichnenden Teil des Anspruches 1 angegebenen Merkmale gelöst. In den dem Anspruch 1 folgenden Ansprüchen sind für die Aufgabenlösung vorteilhafte und förderliche Weiterbildungen beansprucht.

Die Beschichtungsanlage weist ein Kühlband und wenigstens jeweils eine Beschichtungsvorrichtung für die Trägerunter- und -oberseite sowie Bestreuungseinrichtungen für Ober- und Unterseite mit Absaugung und schließlich noch eine zusätzliche Beschichtungsvorrichtung zur Folienbeschichtung und trägerlosen Bahnherstellung auf. Auf der Anlage läßt sich eine Vielzahl unterschiedlich beschichteter Produkte herstellen, wobei während des Beschichtens, also dem Auftrag der Deckmasse, wie Bitumen, auf den Träger, nur geringe Kräfte auf den Träger ausgeübt werden, so daß dieser spannungsfrei bleibt. Die Beschichtungsvorrichtungen weisen einen beheizbaren Auftragskasten für die Deckmasse auf, dessen Seitenwände in Querrichtung verstellbar sind, so daß der Kasten exakt auf die Breite der zu beschichtenden Bahn eingestellt werden kann. Die Beschichtungsvorrichtungen sind mit einer beheizbaren Rakel ausgerüstet, die austauschbar ist und somit den jeweils verarbeiteten Deckmassen angepaßt werden kann. Weiterhin ist vorgesehen, die Rückwand des Auftragkastens verstellbar auszubilden, so daß der Auftragsspalt entsprechend den Erfordernissen veränderbar ist. Durch den beheizbaren Kasten und die beheizte Rakel wird die Deckmasse über die gesamte Breite gleichmäßig warmgehalten. Durch Hintereinanderschaltung mehrerer Beschichtungsvorrichtungen können mehrere Deckmassen nacheinander auf den Träger aufgetragen werden. Die Rakeleinrichtungen ergeben sehr gute und glatte Oberflächen auch bei modifizierten Massen mit einem Fülleranteil bis 30 %. Die Dicke der Beschichtung kann durch einfaches Verstellen der Beschichtungsvorrichtungen in Höhenrichtung beeinflußt werden. Die für die Folienbeschichtung vorgesehene Beschichtungseinrichtung weist eine gut gekühlte Auftragswalze mit einem Doppelmantelsystem auf, so daß die aufgetragene Bitumenmasse an der kleinen Zone der Kontaktfläche mit der Kühlwalze sehr schnell erstarrt, so daß eine sehr gute Trennung von der Walzenoberfläche stattfindet. Gleichzeitig wird beim Kühlband im Bereich dieser Beschichtungsvorrichtung durch Abstellen der Kühlung auf der Unterseite des Kühlbandes eine höhere Temperatur gehalten, so daß das Bitumenprodukt auf dem Kühlband festklebt, mitgenommen wird und erst im Laufe der Kühlstrecke abkühlt und sich löst. Im übrigen ist die Kühlwalze in der Höhe verstellbar, so daß trägerlose Bitumenprodukte in beliebiger Dicke in höchster Qualität hergestellt werden können. Das Kühlband ist an Kragarmen aufgehängt, so daß ein leichtes Auswechseln des aus Stahl bestehenden Kühlbandes möglich ist. Bei einer vorteilhaften Ausführungsform weist die Anlage außer den Bestreuungseinrichtungen für die Ober- und Unterseite noch eine zusätzliche Vorrichtung zur Randbestreuung auf, der ebenfalls eine Absaugung zugeordnet ist. Hierdurch ist die universelle Einsetzbarkeit der Anlage weiter erhöht. Die Anlage erlaubt eine Zuführung der Deckmassen in einem Temperaturbereich von etwa 150 bis 160° C, während bekannte Einrichtungen in einem Temperaturbereich von 180 bis 190° C arbeiten. Durch den niedrigeren Temperaturbereich ist die thermische Belastung wesentlich geringer. Auch kann die Leistung der Anlage erhöht werden, da die Abkühlung der Massen bereits in den Rührwerken erfolgt und nicht erst über das Kühlsystem der Anlage. Durch die höhe Kühlleistung der Kühlwalze bleibt die Beständigkeit der Folien auch bei höhreren Deckmassentemperaturen erhalten. Die Anlage weist ein weiteres nachgeordnetes Kühlband auf; alternativ können aber auch Kühlwalzen vorgesehen sein. Die Bestreuungseinrichtungen sind mit verstellbaren Sieben für das grobe und feine Bestreuungsmaterial ausgerüstet, wobei Leiteinrichtungen zur Ausrichtung des plättchenförmigen Streumaterials vorgesehen sind.Die mit einer höhenverstellbaren Heizwalze ausgerüstete Beschichtungsvorrichtung erlaubt eine vielseitige Beschichtung - mit oder ohne Folien - bei bester Oberflächengüte.

Die Erfindung wird anhand von Ausführungsbeispielen im Zusammenhang mit der Zeichnung näher erläutert. Es zeigen:
- Fig. 1: eine seitliche Ansicht der Anlage in schematischer Darstellung,
- Fig. 2: eine weitere vereinfachte seitliche Ansicht eines Teils der Anlage in vergrößerter Darstellung,
- Fig. 3: eine vereinfachte Grundausführung der Anlage in schematischer seitlicher Darstellung,
- Fig. 4: eine Seitenansicht einer Beschichtungsvorrichtung für das Trägermaterial, vergrößert
- Fig. 5: eine Ansicht der Beschichtungsvorrichtung gemäß Fig. 4 von hinten,
- Fig. 6: eine vergrößerte Seitenansicht der Vorrichtung gemäß Fig. 4 und 5,
- Fig. 7: eine Seitenansicht der Vorrichtung zum Beschichten von Folien bzw. zum Herstellen trägerloser Bahnen,
- Fig. 8: eine vergrößerte seitliche Teilansicht der Folienbeschichtungsvorrichtung bzw. Vorrichtung zum trägerlosen Herstellen von Bahnen aus flüssigen Massen,
- Fig. 9: eine schematische Ansicht gemäß Pfeil IX in Fig. 2, vergrößert,
- Fig. 10: eine seitliche Ansicht einer mit einer Heizwalze versehenen Beschichtungsvorrichtung,
- Fig. 11: eine Vorderansicht der Vorrichtung gemäß Fig. 10,
- Fig. 12: einen Längsschnitt durch eine Kühlwalze in Doppelmantelbauweise,
- Fig. 13: eine Stirnansicht der Kühlwalze,
- Fig. 14: eine Heizwalze mit elektrischer Beheizung im Längsschnitt und
- Fig. 15: einen Schnitt durch eine Vorrichtung zur Hauptbestreuung in schematischer Darstellung.

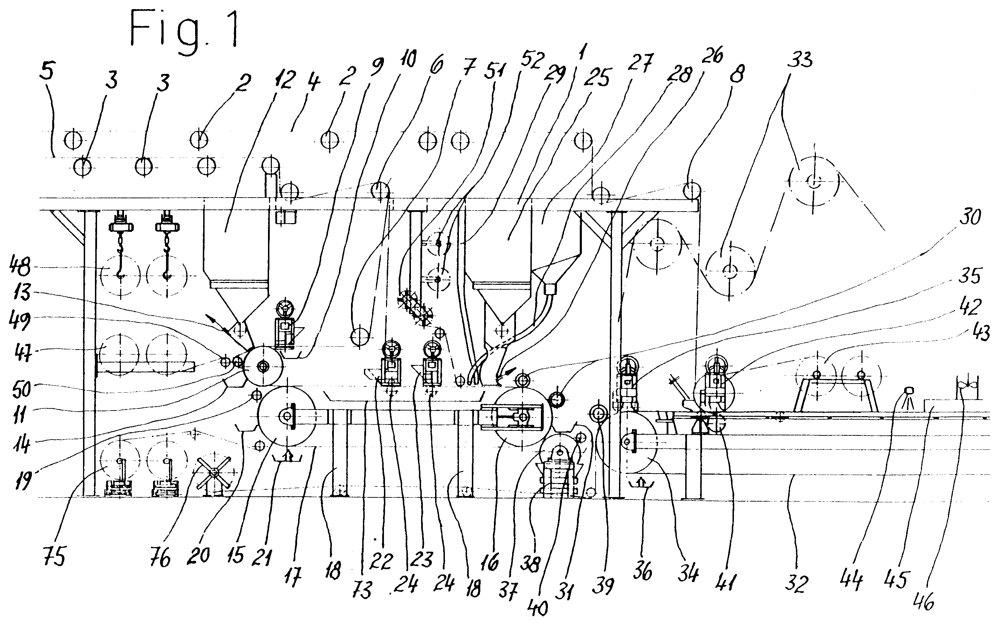

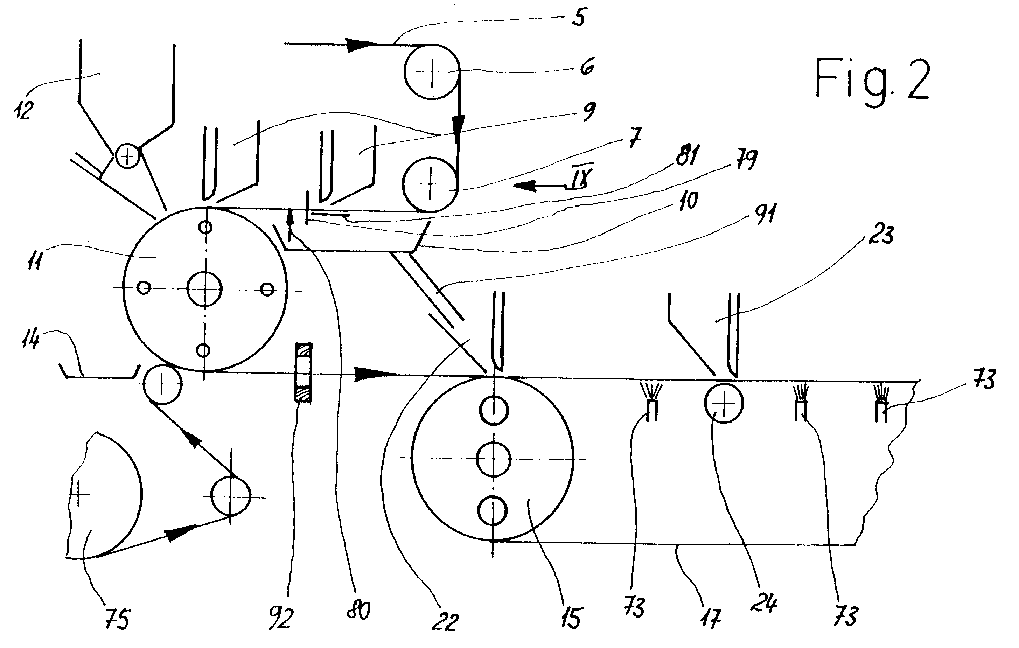

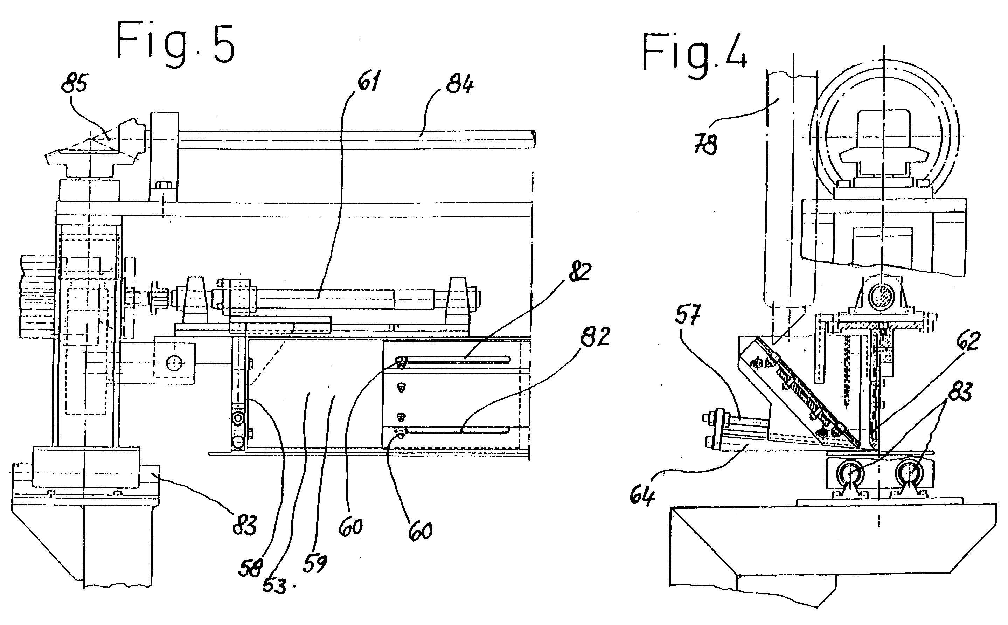

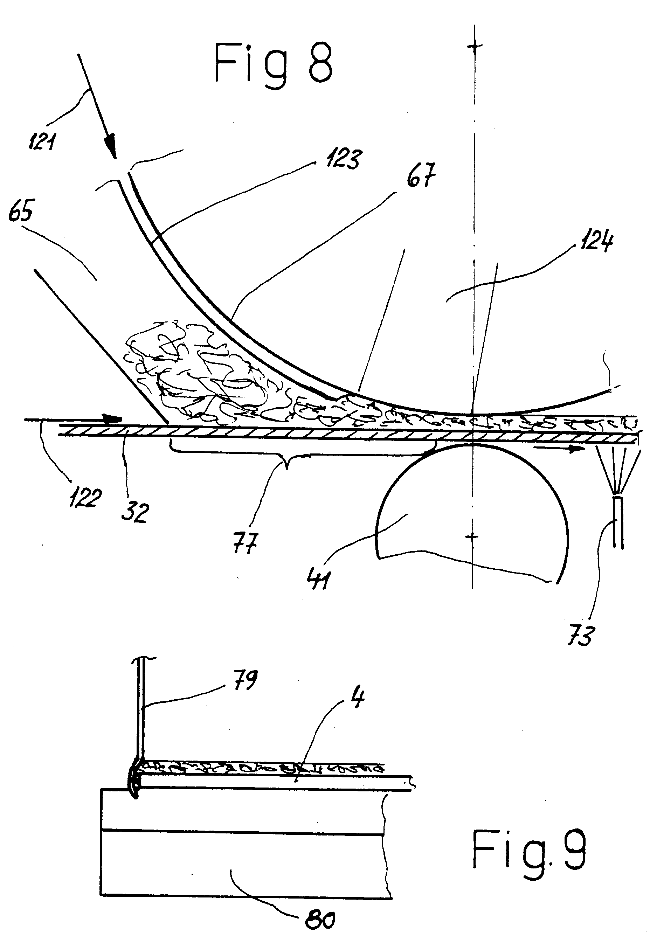

Die in Fig. 1 schematisch gezeigte Anlage bzw. Einrichtung zum mehrfachen Beschichten bahnförmigen Trägermaterials bzw. zur Herstellung trägerloser Bahnen besteht aus dem Maschinengestell 1 mit den darüber angeordneten beheizten oder unbeheizten und angetriebenen Überführungswalzen 2 und 3 für zwei Materialbahnen 4 und 5, die von einer nicht gezeigten Vorratsrolle abgezogen werden oder einebenfalls nicht gezeigtes Imprägnierbad durchlaufen haben. Des weiteren sind Bahnkantensteuerungen 6, 7 und 8 vorgesehen, die über eine fotooptische, mechanische oder pneumatische Kantenabtastung und eine entsprechende Steuereinrichtung den Bahnenverlauf überwachen und ggf. korrigieren, so daß ein exakter Bahnenverlauf sichergestellt ist. Für die Beschichtung der Bahnunterseite ist eine Beschichtungsvorrichtung 9 angeordnet, von der ggf. mehrere hintereinander vorgesehen sein können, um eine Mehrfachbeschichtung des Trägermaterials vornehmen zu können. Auf diese Beschichtungsvorrichtung 9 mit Stütztisch 81 wird im Zusammenhang mit Fig. 4, 5 und 6 noch näher eingegangen. In Fig. 2 sind übrigens schematisch zwei derartige Beschichtungsvorrichtungen in Reihe hintereinanderliegend gezeigt. Der Vorrichtung 9 ist eine beheizte Auffangwanne 10 für an den Rändern überfließendes Überschußmaterial zugeordnet. Wie insbesonder in Fig. 9 zu erkennen ist, wird das Beschichtungsmaterial nämlich im Überschuß zugegeben, so daß es an den Rändern und Kanten des Trägers 4 bzw. 5 herabfließt und somit auch die Trägerkanten vollständig bedeckt und beschichtet werden. Seitlich angeordnete Randabstreifer 79, die gekrümmt gestaltet sind, streifen überschüssiges Material ab und glätten den Rand. Desweiteren ist ein Messer 80 vorgesehen, das an der Trägerunterseite angeordnet ist und hier glättend wirkt.

Die Anlage weist eine beheizte Umlenkwalze 11 auf, der noch eine Abstreifeinrichtung zugeordnet sein kann. Oberhalb der Umlenkwalze 11 ist der Behälter bzw. Bunker 12 für die Unterbestreuung angeordnet, der mit einem Staubabsaugsystem 13 gekoppelt ist. Unterbestreuungsüberschuß wird in der Wanne 14 aufgefangen und zum Bunker 12 zurückgefördert. In Fig. 2 ist auch noch ein Tastkopf 92 zu erkennen, mit dem die Position der Seitenkanten des Trägers erkannt und gemessen wird.

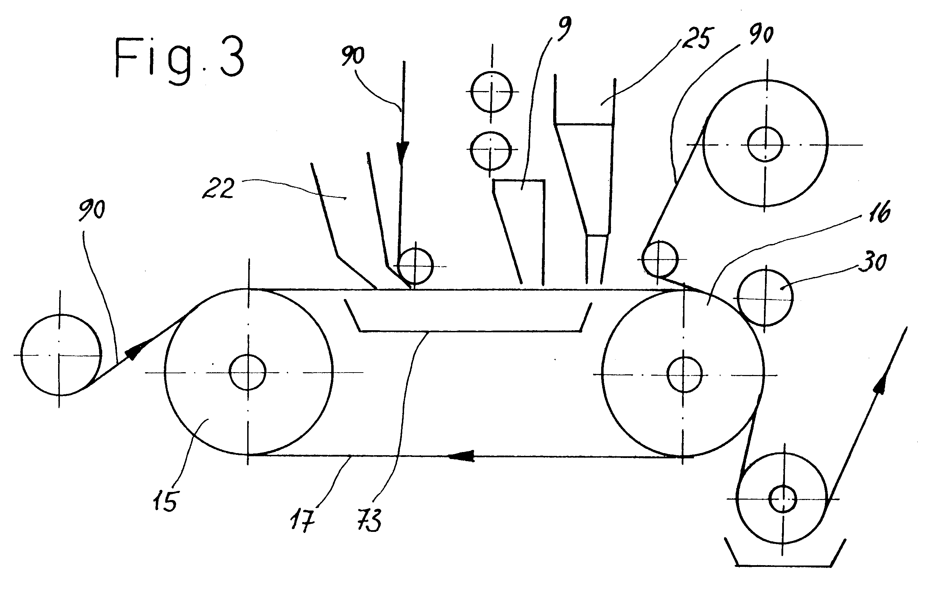

Die Anlage weist ein auf den beiden Walzen 15 und 16 aufliegendes Kühlband 17 auf, das als endlos geschweißtes Stahlband in Cantilever-Bauweise, also freitragend, ausgebildet ist. Hierbei wird das Kühlband 17 durch Kragarme 18 gehalten, so daß sich ein schneller Wechsel des Kühlbandes 17 bewerkstelligen läßt. Die Kühlung erfolgt über die Kühleinrichtung 73, die als Wasserdüsen, Kühlwanne usw. ausgebildet sein kann (siehe z.B. auch Fig. 2 und 3).

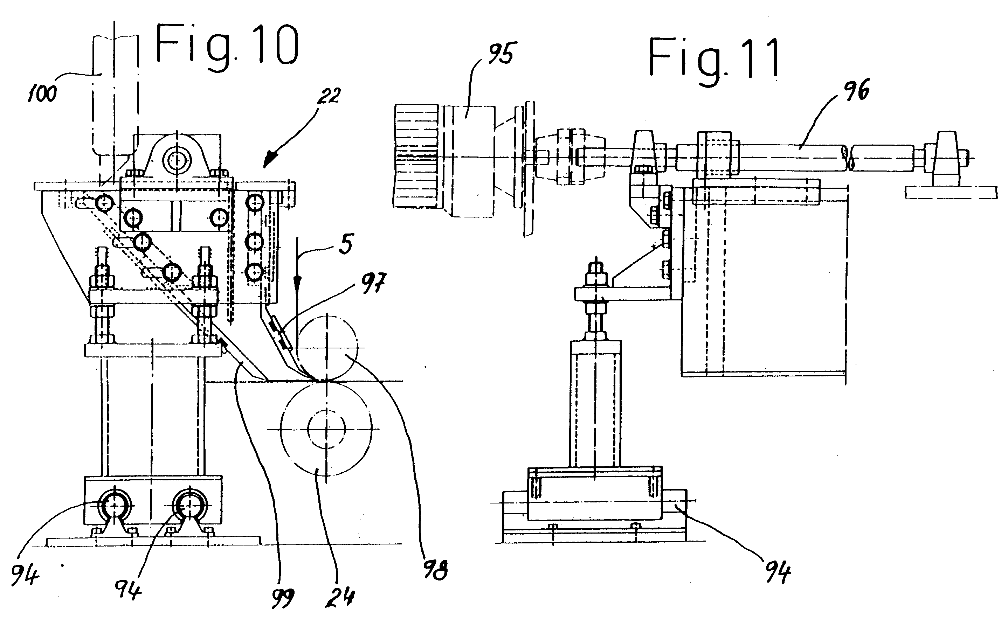

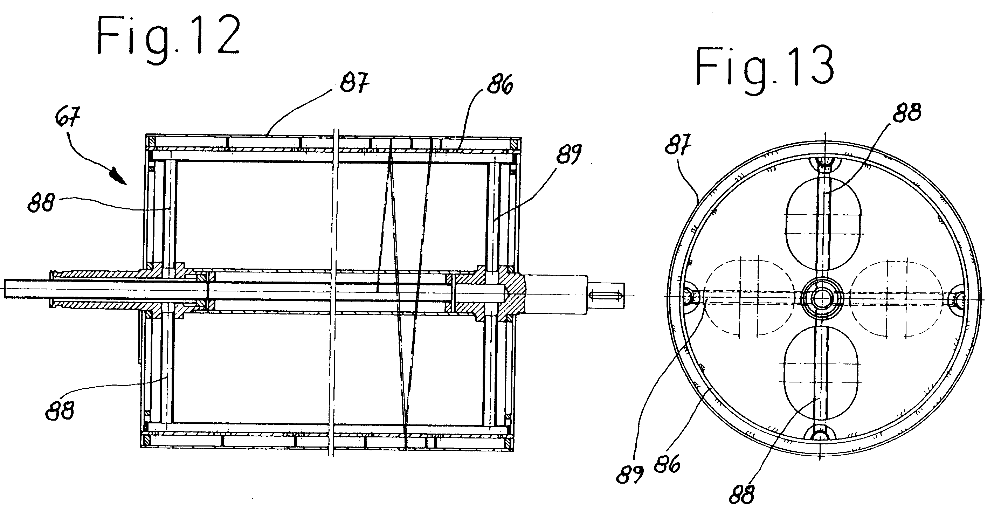

Dicht über dem Kühlband 17 sind zwei weitere Beschichtungsvorrichtungen 22, 23 vorgesehen, die der Beschichtung der Trägeroberseite dienen, wobei die Vorrichtung 23 im wesentlichen im Aufbau der Beschichtungsstation 9 entspricht, der im Zusammenhang mit Fig. 4, 5 und 6 beschrieben Wird, während der Aufbau der Vorrichtung 22 in den Fig. 10 und 11 gezeigt ist. Unter jeder der Beschichtungsstationen 22, 23 ist eine Stützwalze 24 vorgesehen, die innerhalb des Kühlbandes 17 angeordnet sind. Bei Verarbeitung jeweils gleicher Massen wird das vom Träger abgestreifte und in der Auffangwanne 10 aufgefangene Überschußmaterial direkt der Vorrichtung 22 zugeführt. Zu diesem Zweck besteht zwischen der Auffangwanne 10 und der Vorrichtung 22 eine Verbindung 91 (vgl. Fig. 2). Nach den Beschichtungsstationen 22, 23 (auch hier können Selbstverständlich noch weitere Beschichtungseinrichtungen für Mehrfachbeschichtung angeordnet sein) ist der Behälter 25 für die Haupt- und Oberbestreuung mit Absaugung 26 für anfallenden Staub angeordnet, dem der Behälter 27 für die Randbestreuung folgt, der mit der Zuführung 28 bzw. bei beidseitiger Randbestreuung mit zwei derartiger Zuführungen 28 ausgerüstet ist. Weiterhin ist noch die Absaugung 29 für überschüssige Randbestreuung der Zuführung 28 nachgeordnet, die eine Vermischung der Bestreuungen verhindert. Zwei gummierte Einpreßwalzen 30 sorgen für ein Anpressen des Bestreuungsmaterials in die aufgebrachte Deckschicht, während die Rückfördereinrichtung 31 überschüssiges Material der Oberbestreuung in den Behälter 25 zurückfördert, so daß kein Material verlorengeht. Den Absaug- und Rückfördersystemen kann noch eine Zykloneinrichtung nachgeordnet sein, die das Bestreuungsmaterial und den Staub voneinander trennt. Der Staub kann sodann entsorgt und der Mischanlage für die Bitumenmasse als Füllstoff zugeführt werden. Durch das Absaugen wird ein restloses Entleeren der Fördersysteme erreicht, so daß es bei Umstellungen von verschiedenen Bestreuungsarten, z.B. von roter Bestreuung auf grüne, zu keiner Vermischung der verschiedenen Bestreuungsmaterialien kommt und somit die Ausschußmengen reduziert werden.

Die Anlage ist mit einem weiteren Kühlbandsystem 32 ausgestattet, das sich an das Kühlband 17 anschließt. Statt dieses zweiten Kühlbandes 32, das gleichfalls ein Stahlband mit Düsenkühlung ist, kann alternativ auch eine Walzenkühlung vorgesehen sein, die in Fig. 1 strichpunktiert eingezeichnet ist und das Bezugszeichen 33 trägt. Oberhalb der das Kühlband 32 tragenden Walze 34 ist eine Beschichtungseinrichtung 35 angeordnet, die wiederum im wesentlichen wie die bereits angeführten Beschichtungsstationen ausgebildet ist. Unterhalb der Walze 34 ist ein dem Sprühkopf 21 entsprechender Sprühkopf 36 gelegen, mit dem Trennmittel auf die Oberfläche des Kühlbandes 32 gesprüht wird. Zwischen den beiden Kühlbändern 17 und 32 ist eine Umlenkwalze 37 angeordnet, die in ein Wasserbad 38 mit Höhenverstellung der Kühlwasserwanne zur Anfeuchtung und Kühlung bei blanken Produktoberflächen eintaucht. Bei Folie oder Bestreuung ist das Wasserbad 38 abgesenkt, so daß die Umlenkwalze 37 außerhalb des Wasserbades 38 läuft. Eine vor der Beschichtungsstation 35 liegende gummierte Einpreßwalze 39 für die Oberschicht drückt gegen die Walze 34 des Kühlbandes 32. Die im Bereich der Umlenkwalze 37 vorgesehene Bürstenwalze 40 in spiralförmiger Ausbildung sorgt für den Abtransport noch vorhandenen Oberbestreuungsüberschusses zur Seite.

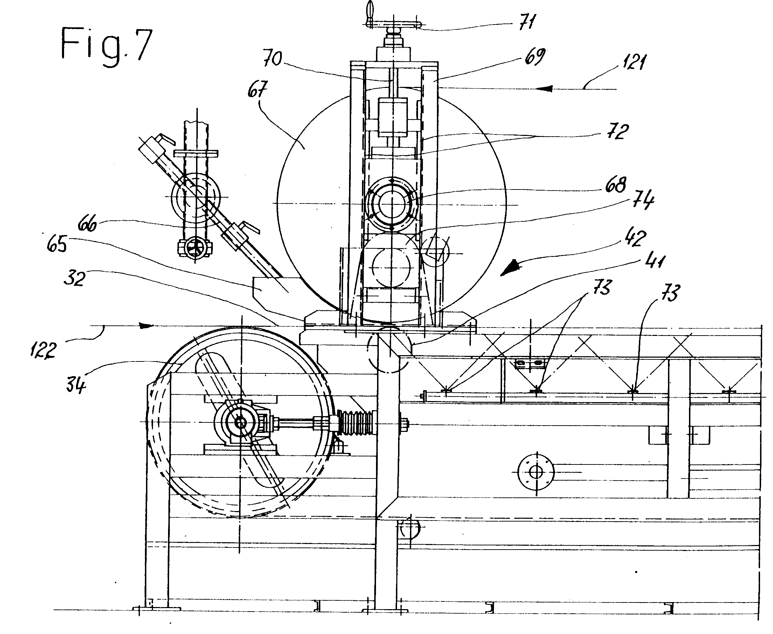

Nach der Beschichtungsvorrichtung 35, die für zusätzliche differente Massen bestimmt ist, ist über die Stützwalze 41 eine Beschichtungsvorrichtung 42 angeordnet, die auch als Bitumenfolienproduktionskopf bezeichnet werden kann. Der Aufbau dieser Vorrichtung, mit der trägerlose Bahnen herstellbar sind und die auch zur Beschichtung von Folien oder Dachbahnen herangezogen wird, geht vor allem aus Fig. 7 hervor, auf die weiter unten näher eingegangen wird. Von einer Abrollvorrichtung 43 können zusätzliche Trägermaterialien oder Abdeckbahnen abgezogen werden. Sowohl das Kühlband 17 als auch das Kühlband 32 sind mit Kühleinrichtungen, nämlich insbesondere Sprühvorrichtungen für Kühlflüssigkeit, ausgerüstet, die näher in Fig. 2 und 7 zu erkennen sind. Zusätzlich zu diesen Kühlwasserandüsungen sind außerhalb des Kühlbandes 32 Düsen 44 für zusätzliche Wasserbespülung vorgesehen. Auf dem Kühlband 32 sind noch verschiebbare Wasserdampf Absaughauben 45 mit Ventilatoren 46 zum Absaugen des Wasserdampfes angeordnet.

Eine vereinfachte Grundausführung der Anlage ist in Fig. 3 gezeigt. Da die Anlage im Baukastensystem aufgebaut ist, kann sie jederzeit den Erfordernissen entsprechend erweitert und nachgerüstet werden. Bei der in Fig. 3 gezeigten Grundausführung sind zwei Beschichtungsvorrichtungen 9 bzw. 22 hintereinander angeordnet, denen sich die Bestreuungseinrichtung 25 anschließt. Folie 90 wird jeweils nach Bedarf und gewünschtem Erzeugnis zugeführt, so daß beispielsweise Produkte hergestellt werden können, die oben und/oder unten blank sind, die oben und/oder unten eine Folie aufweisen, die auf der Oberseite mit Bestreuung versehen sind usw.

Um weitere Bahnen oder Folie verarbeiten zu können, sind abgesehen von der bereits erwähnten Abrollvorrichtung 43 eine Abrollstation 47 für siliconisierte Abdeckbahnen mit darüber angeordneten, abfahrbaren Ersatz rollen 48 und Zuführ- sowie Umlenkwalzen 49 und 50, von denen die Walzen 49 unbeheizt und die Walzen 50 beheizt sind, eine Abrolleinrichtung 51 für Randstreifenfolien und eine weitere Folienabrollung 52 zum Aufkaschieren auf die heiße Bitumendeckschicht vorgesehen.

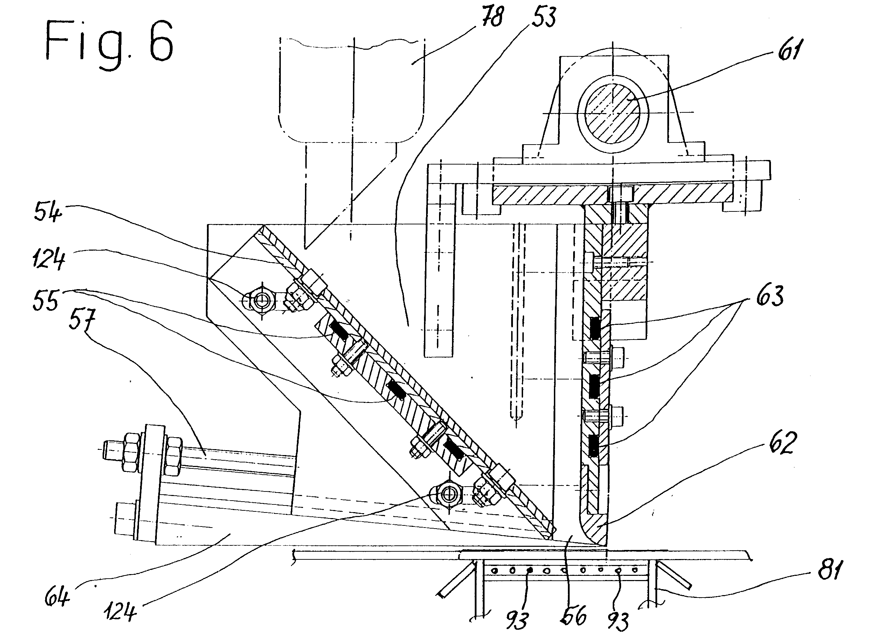

Die prinzipielle konstruktive Ausbildung der Beschichtungsvorrichtungen 9, 23 oder 35 geht aus den Fig. 4, 5 und 6 hervor. Die Beschichtungsvorrichtung bzw. -station ist mit einem Auftragskasten 53 für die aufzubringende Masse ausgerüstet, der durch in die Rückwand 54 eingelegte Heizstäbe 55 beheizbar ist. Zur Beheizung können auch Heizmatten oder Thermalöl eingesetzt werden. Die Breite des Ausflußspaltes 56 kann entsprechend den Erfordernissen und in Abhängigkeit von den verarbeiteten Massen durch Verschieben der mit Schrauben bzw. Muttern 124 festlegbaren Rückwand 54 eingestellt werden. Auch die Länge des Ausflußspaltes 56 ist in Abhängigkeit bzw. in Abstimmung auf die Breite der zu beschichtenden Trägerbahn einstellbar. Zu diesem Zweck sind die Seitenwände 58 des Auftragskastens 53 jeweils für sich seitlich verschiebbar. Die mit den Seitenwänden 58 verbundenen Querwände 59 beider Seitenwände 58 überlappen sich und sind übereinander verschiebbar, wobei Schrauben mit selbstsichernden Muttern 60 in Langlöcher 82 der Querwände 59 eingreifen. Die Querverschiebung jeder der Seitenwände 58 erfolgt jeweils über eine Gewindespindel 61 von Hand oder motorisch. Außerdem kann noch die gesamte Beschichtungsvorrichtung, die auf quer verlaufenden Schienen 83 am Maschinenrahmen abgestützt ist, quer zur Produktionsrichtung, also der Laufrichtung des Trägers, je nach der kontrollierten Lage des Trägers über die Spindel 84 und Kegelradgetriebe 85 verschoben und einreguliert werden. Die Beschichtungsvorrichtung ist noch mit einer Rakel 62 ausgestattet, das je nach Erfordernis gegen eine andere Rakel austauschbar am Auftragskasten 53 befestigt und durch eingelegte Heizstäbe 63 od. dgl. gleichfalls beheizbar ist. Außerdem weist der Auftragskasten 53 noch einen Gleitkeil 64 mit Stellschraube 57 auf, der aus Kunststoff besteht bzw. eine Gleitschicht aus Kunststoff aufweist, die bei Berührung mit dem Kühlband ein leichtes Gleiten ermöglicht und gleichzeitig für die seitliche Abdichtung bzw. für gleichen Rand sorgt. Die Einleitung der zu beschichtenden Masse in den Auftragskasten 53 erfolgt über die Zuführung 78. Der gesamte Kasten 53 ist in Höhenrichtung verstellbar, so daß die Dicke der aufzutragenden Schicht auf den Träger exakt eingestellt werden kann. Hierfür kann noch eine entsprechende Skala, ein elektrischer Linearmaßstab usw. vorgesehen sein, so daß eine exakte Einstellung und Justierung der Lage des Trägers vorgenommen werden kann. Weitere Dickenmessungen sind nicht notwendig. Da das Produkt auf dem Kühlband aufliegt, wird ein Schwingen wirksam verhindert. Die relative Lage des Trägers ist jederzeit bestimm- und korrigierbar. In Fig. 6 ist auch die Anordnung des Stütztisches 81 bei der Vorrichtung 9 zu erkennen, der über eingelegte Heizstäbe 93 beheizt wird.

In Fig. 7 ist die Beschichtungsvorrichtung 42 näher gezeigt. Diese Beschichtungsvorrichtung 42 dient zum Beschichten von Folien, aber auch zum trägerlosen Herstellen von bahnförmigem Material, sei es Bitumen oder Schwefel. Sie kann aber beispielsweise auch zum bahnförmigen Herstellen von Schokolademassen verwendet werden. Die Beschichtungsvorrichtung 42 besitzt einen beheizten Kasten 65 für die aufzutragende Masse, die über die Zuführeinrichtung 66 dem Kasten 65 zugeführt wird. Im Falle von Bitumen wird dieses mit einer Temperatur von ungefähr 150 bis 210° C eingebracht. Der Kasten 65 weist gleichfalls in Querrichtung verschiebbare Seitenwände auf, so daß die Ausflußbreite exakt eingestellt werden kann. Die Beschichtungsvorrichtung 42 ist mit einer Kühlwalze 67 ausgestattet, deren Oberflächen- oder Außentemperatur auf ca. 5° C gekühlt wird. Sie ist in Doppelmantelbauweise ausgebildet und beidseitig in Lagern 68 gelagert, wobei die gesamte Kühlwalze 67 über die Stelleinrichtung 69, die im wesentlichen aus dem Spindeltrieb 70, dem Handrad 71 (oder einem Stellmotor) und der Führung 72 besteht, in Höhenrichtung verstellbar ist. Wie aus Fig. 12 und 13 hervorgeht, besteht die Kühlwalze 67 im wesentlichen aus einem inneren Mantel 86, der die auf die Walze einwirkenden Kräfte aufnimmt, und einem wesentlich dünner gehaltenen Außenmantel 87, so daß eine gute Kühlwirkung erzielt wird. Das in mehreren zwischen Mantel 86 und 87 gebildeten Sektionen von den Zuläufen 88 zu den Abläufen 89 strömende Kühlwasser sorgt für eine homogene Temperaturverteilung über die Länge der Walze 67. Die Vorrichtung 42 ist oberhalb des Kühlbandes 32 angeordnet und weist die bereits erwähnte Stützwalze 41 auf, die anstehende und auftretende Kräfte aufnimmt und auch das Kühlband 32 mit abstützt. An der Unterseite dieses Kühlbandes 32 sind Düsen 73 zur Abkühlung des Kühlbandes 32 angeordnet, die Kühlwasser an die Bandunterseite sprühen. Der Antrieb der Kühlwalze 67 erfolgt mittels des Gleichstrommotors 74.

In den Fig. 10 und 11 ist die Beschichtungsvorrichtung 22 gezeigt, die auf quer verlaufenden Schienen 94 abgestützt und durch den Motor 95 über den Spindeltrieb 96 in Querrichtung entsprechend der jeweiligen Lage des Trägers, vom Tastkopf 92 signalisiert, verlagerbar ist. Die der heizbaren Rakel 97 vorgelagerte Heizwalze 98 ist höhenverstellbar. Die Rückwand 99 des Auftragskastens ist zur Änderung der Austrittsspaltbreite verstellbar. Die Massenzuführung erfolgt über den Einlaß 100, wobei bei Verarbeitung gleicher Massen auch Üb-erschußmasse von der Auffangwanne 10 herangeführt wird.

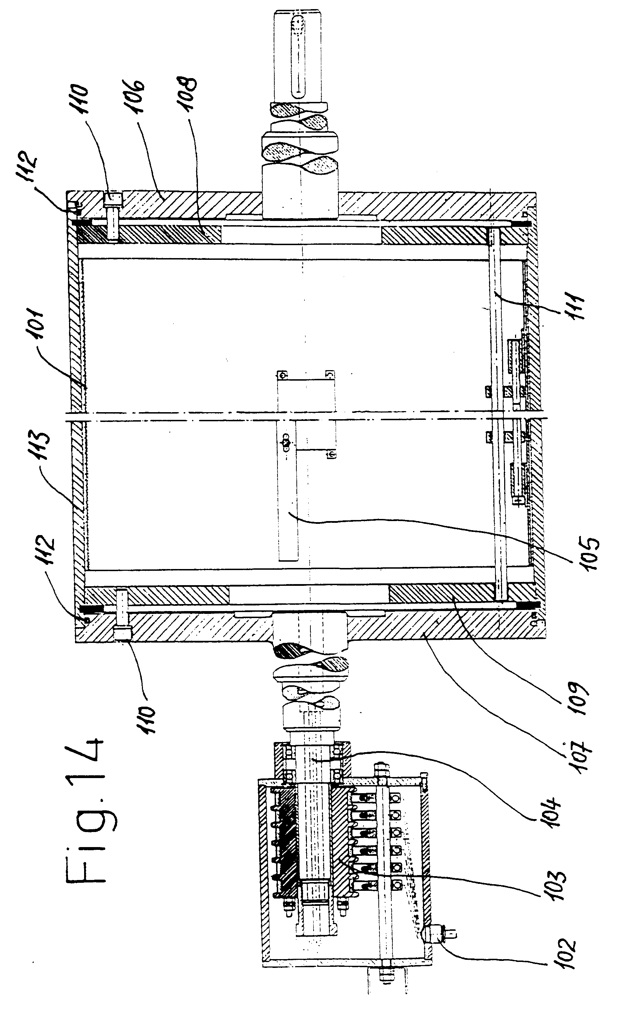

Wie sich zeigt, sind in der Anlage eine Reihe von beheizbaren Walzen verwendet. Diese Walzen können beispielsweise elektrisch beheizt werden. Eine elektrisch beheizte Heizwalze ist in vergrößerter Darstellung in Fig. 14 gezeigt. Dabei liegt im Inneren der Walze eine Heizmatte 101, die über den elektrischen Anschluß 102 und den Schleifring 103 mit Hohlwelle 104 mit elektrischer Energie versorgt wird. Ein Temperaturfühler 105 sorgt für die Einhaltung der gewünschten Temperatur. Die beiden Stirnscheiben 106 und 107 sind an den Befestigungsscheiben 108 und 109 über Schrauben 110 befestigt, wobei die Befestigungsscheiben 108, 109 bzw. die Heizmatte 101 über die Verdrehsicherung 111 festgehalten sind. Eingelegte Dichtungen 112 zwischen den Stirnscheiben 106, 107 und dem Außenmantel 113 dichten die Heizwalze ab.

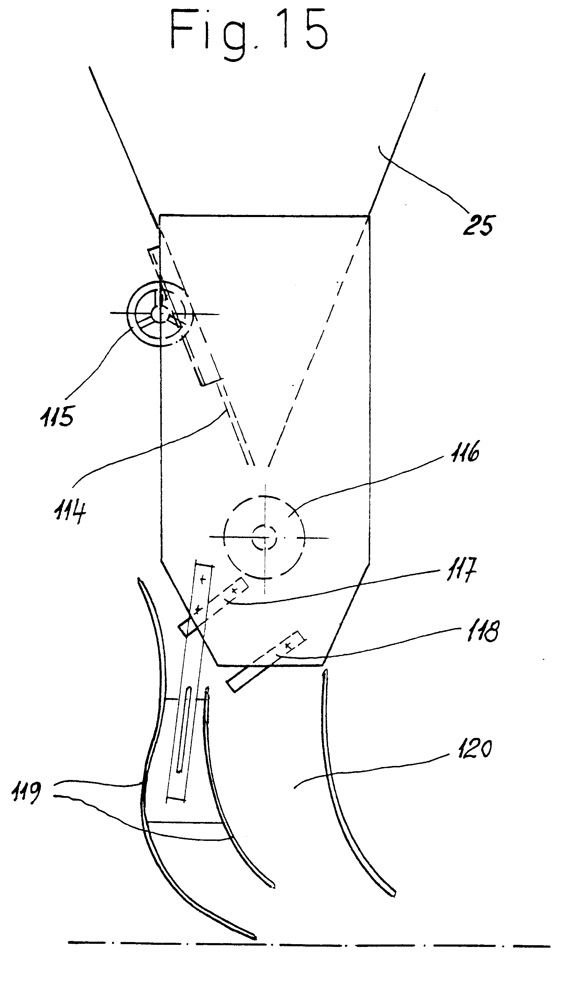

Schließlich ist noch schematisch in Fig. 15 die Bestreuungseinrichtung 25 für die Hauptbestreuung gezeigt, mit der grobes, plättchenförmiges und feines Bestreuungsmaterial aufgebracht wird. Durch Verschiebung der Trichterwand 114 über das Stellrad 115 kann die Ausflußweite des Trichters und damit die ausgebrachte Bestreuungsmenge pro Zeiteinheit reguliert werden. Unterhalb der Streuwalze 116 sind zwei neigungsverstellbare Siebe 117 und 118 angeordnet, von denen das Sieb 117 das grobe Material aussondert, das über Leitbleche 119 nach unten rutscht und hierbei in der Weise ausgerichtet wird, daß die plättchenförmigen Bestandteile der vorher aufgebrachten Beschichtung im flachen Winkel bzw. etwa tangential zugeführt werden, so daß sie auf dieser flach zu liegen kommen. Das feine Material, nochmals größenmäßig getrennt durch das Sieb 118, fällt, geführt durch den Leitkanal 120, im Produktionsverlauf nach der Grobbestreuung auf die Beschichtung und füllt die offengebliebenen Bestreuungslücken, so daß eine sehr gute und dichte Bestreuung der Schichtmasse sichergestellt ist.

Es wird nun kurz auf die Wirkungsweise der Anlage bei der Unter- und Oberbeschichtung eines bahnförmigen Trägers eingegangen, wie dies in Fig. 1 und 2 ersichtlich ist. Das bahnförmige Trägermaterial 5 gelangt über die verschiedenen Umlenkwalzen 3 und Kantensteuerungen 6 und 7 zur Beschichtungsvorrichtung 9 für die Unterseite. Die Beschichtungsmasse, beispielsweise Bitumen, wird in der gewünschten Dicke auf den Träger 5 aufgebracht, sodann wird über die Bestreuungseinrichtung 12 das Streumaterial für die Unterbestreuung aufgegeben. Staub wird über die Absaugung 13 abgesaugt. Eine Mehrfachbeschichtung kann durch die Anordnung weiterer Beschichtungsvorrichtungen vorgenommen werden. Der mit der Unterbeschichtung versehene Träger 5 wird sodann der Beschichtungsvorrichtung 22 für die Oberbeschichtung zugeführt. Anschließend wird die Randbestreuung über die Zuführungen 28 oder Folie von 52 aufgebracht, überschüssiges Material über die Vorrichtung 29 abgesaugt, und die Oberbestreuung aus dem Bunker 25 aufgegeben. Das Kühlband 17, auf dem der Träger 5 beim Aufbringen der Oberbeschichtung aufliegt, wird über Kühldüsen 73 gekühlt. Die Folie kann auch direkt von der Umlenkwalze 6 der Beschichtungsvorrichtung 22 zugeführt werden, wie auch in Fig. 10 angedeutet. Des weiteren stehen noch Abrollvorrichtungen 75, 76 für Folien oder Zusatzträger bzw. Randfolien zur Verfügung. Hinzuweisen ist noch darauf, daß insbesondere bei kaltselbstklebenden Materialien, die von der Rolle 47 abgezogen werden, eine Zugabe im Überschuß erfolgt, so daß Schrumpfspannungen kompensiert werden, die später auftreten können.

Beim trägerlosen Herstellen gelangt die Masse (Bitumen) - vgl. auch Fig. 8 - direkt vom Aufgabekasten 65 der Vorrichtung 42 auf das Kühlband 32. In der Kontaktzone 77 zwischen Masse und Kühlband klebt das Bitumen zunächst am Kühlband 32 an, da dieses in diesem Bereich nicht oder nur geringfügig gekühlt wird, und wird vom Kühlband 32 mitgenommen. Zusätzlich können unten und/oder oben Folien 121, 122 zugeführt werden. Die Rückwand 123 des Auftragskastens 65 verläuft etwa äquidistant zum Mantel der Walze 67, so daß in diesem Bereich eine Aufheizung der Kühlwalze 67 verhindert wird. Erst in der schmalen Kontaktzone 124, in der die Beschichtungsmasse in Kontakt mit der Walze 67 gelangt, erfolgt eine geringe Aufheizung, so daß sich das Bitumen ohne Schwierigkeiten von der in der Temperatur niedrig bleibenden Kühlwalze 67 löst. Auch vom Kühlband 32 erfolgt in dem durch die Düsen 73 gekühlten Bereich ein leichtes Lösen. Der Auftrag der Bitumenmasse auf das Kühlband 32 erfolgt als in der Breite einstellbarer Bitumenwulst direkt vor der Kühlwalze 67, wobei das Kühlband 32 leicht mit Trennmittel benetzt ist.

## Patentansprüche

1. Anlage zur ein- oder mehrfachen Unter- und/oder Oberbeschichtung bahnförmiger Trägermaterialien oder zur Herstellung trägerloser Bahnen mit bzw. aus einer oder mehreren Deckmassen, wie Bitumen, ggf. mit Aufbringung eines Bestreuungsmaterials, wie Schiefergranulat, Quarzsand, Talkum usw., und wahlweiser Abdeckung mit Folien oder dgl., gekennzeichnet durch ein Kühlband (17) und wenigstens jeweils eine Beschichtungsvorrichtung (9, 22, 23, 35) für die Trägerunter- und -oberseite, die getrennt voneinander angeordnet sind, sowie getrennte Bestreuungseinrichtungen (12, 25) für die beschichtete Trägerober- und -unterseite mit Absaugung (13, 26) für anfallenden Staub, wobei zur Abdeckung mit Folien oder dgl. oder bei der trägerlosen Bahnherstellung wenigstens eine weitere Beschichtungsvorrichtung (42) mit Kühlwalze (67) vorgesehen ist.

2. Anlage nach Anspruch 1, dadurch gekennzeichnet, daß die Beschichtungsvorrichtungen (9, 22, 23, 35) für die Trägerober- und -unterseite eine beheizbare und austauschbare Rakel (62, 97) aufweisen.

3. Anlage nach Anspruch 1 oder 2, dadurch gekennzeichnet, daß die Beschichtungsvorrichtung (9, 22, 23, 35) einen Auftragskasten (53) für die Deckmasse besitzt, dessen Rückwand (54, 99) und dessen Seitenwände (58) zur Änderung und Einstellung des Austrittsspaltes (56) verschiebbar sind.

4. Anlage nach Anspruch 3, dadurch gekennzeichnet, daß die Rückwand (54) aus zwei sich überlappenden und gegeneinander teleskopartig verschiebbaren Querwänden (59) besteht, von denen die eine Querwand (59) mit der einen und die andere Querwand (59) mit der anderen Seitenwand (58) verbunden ist, wobei zur jeweiligen Verschiebung der Seitenwände (58) in Querrichtung quer verlaufende Gewindespindeln (61) angeordnet sind.

5. Anlage nach einem der Ansprüche 1 bis 4, dadurch gekennzeichnet, daß der Auftragskasten (53) der Beschichtungsvorrichtungen (9, 22, 23, 35) beheizt ist, wobei in der Rückwand (54) elektrische Heizstäbe (55) eingelegt sind.

6. Anlage nach einem der Ansprüche 1 bis 5, dadurch gekennzeichnet, daß an der Unterseite der Beschichtungsvorrichtung (9, 23, 35) Gleitkeile (64) aus gleitfähigem Kunststoff oder mit einer Kunststoffbeschichtung angeordnet sind.

7. Anlage nach einem der Ansprüche 1 bis 6, dadurch gekennzeichnet, daß die Beschichtungsvorrichtung (9, 22, 23, 35) in der Höhe verstellbar ist.

8. Anlage nach einem der Ansprüche 1 bis 7, dadurch gekennzeichnet, daß die Beschichtungsvorrichtung (42) für die Abdeckung mit Folien mit einem mit verschiebbaren Seitenwänden ausgerüsteten Auftragskasten (65) für die Deckmasse ausgestattet und die Kühlwalze (67) höhenverstellbar ist.

9. Anlage nach einem der Ansprüche 1 bis 8, dadurch gekennzeichnet, daß dem Kühlband (17) ein weiteres Kühlband (32) oder mehrere gekühlte Walzen (33) nachgeordnet ist bzw. sind.

10. Anlage nach einem der Ansprüche 1 bis 9, dadurch gekennzeichnet, daß das Kühlband (17) an Kragarmen (18) aufgehängt ist.

11. Anlage nach einem der Ansprüche 1 bis 10, dadurch gekennzeichnet, daß zusätzlich zu den Bestreuungseinrichtungen (12, 25) für die Ober- und Unterseite des Trägers eine Randbestreuungseinrichtung (27) angeordnet ist, der eine Randabsaugung (29) zugeordnet ist.

12. Anlage nach einem der Ansprüche 1 bis 11, dadurch gekennzeichnet, daß die Bestreuungseinrichtung (25) für die Hauptbestreuung wenigstens zwei neigungsverstellbare Siebe (117, 118) für die groben und die feinen Streuanteile aufweist, denen Leitbleche und -kanäle (119, 120) zum Ausrichten der Streubestandteile nachgeordnet sind.

13. Anlage nach einem der Ansprüche 1 bis 12, dadurch gekennzeichnet, daß unterhalb der Beschichtungsvorrichtungen (9, 22, 23, 35, 42) Stützwalzen (24, 41) angeordnet sind.

14. Anlage nach einem der Ansprüche 1 bis 13, dadurch gekennzeichnet, daß den Kühlbändern (17, 32) Sprühvorrichtungen (21, 36) zum Aufbringen eines Trennmittels auf die Bandoberfläche und Kühlwassereinrichtungen, wie Kühlwasserdüsen (73), zum Kühlen des Kühlbandes (17, 32) zugeordnet sind.

15. Anlage nach einem der Ansprüche 1 bis 14, dadurch gekennzeichnet, daß zwischen den Kühlbändern (17, 32) eine Umlenkwalze (37) angeordnet ist, der ein höhenverstellbares Kühlwasserbad (38) zugeordnet ist.

16. Anlage nach einem der Ansprüche 1 bis 15, gekennzeichnet durch mehrere gummierte Einpreßwalzen (30) zum Anpressen des Bestreuungsmaterials.

17. Anlage nach einem der Ansprüche 1 bis 16, gekennzeichnet durch zusätzliche Abrollvorrichtungen (43, 47, 51, 52, 75, 76) für Abdeckbahnen, Randstreifen, Folien usw.

18. Anlage nach einem der Ansprüche 1 bis 17, dadurch gekennzeichnet, daß die Beschichtungsvorrichtungen (9, 22, 23, 35) in Querrichtung verschiebbar sind.

19. Anlage nach Anspruch 18, dadurch gekennzeichnet, daß die Beschichtungsvorrichtungen auf quer verlaufenden Schienen (83, 94) abgestützt sind.

20. Anlage nach einem der Ansprüche 1 bis 19, dadurch gekennzeichnet, daß die Beschichtungsvorrichtung (22) eine der Rakel (97) nachgeordnete Heizwalze (98) aufweist, die höhenverstellbar ist.

21. Anlage nach einem der Ansprüche 1 bis 20, dadurch gekennzeichnet, daß die Heizwalzen eine innerhalb des Walzenmantels (113) rundherum angeordnete Heizmatte (101) sowie einen im Walzeninneren angeordneten Temperaturfühler (105) aufweisen.

22. Anlage nach einem der Ansprüche 1 bis 21, dadurch gekennzeichnet, daß die Kühlwalzen (67) zwei koaxial zueinander liegende Mäntel (86, 87) aufweisen, von denen der außenliegende Mantel (87) in der Wandstärke dünn ausgebildet ist, während der die Belastungskräfte aufnehmende Innenmantel (86) stärkerwandig ist, und daß im Ringraum zwischen den Mänteln (86, 87) Sektionen für das Kühlwasser angeordnet sind.

23. Anlage nach einem der Ansprüche 1 bis 22, dadurch gekennzeichnet, daß unterhalb der Beschichtungsstation (9) ein Stütztisch (81) mit Heizstäben (93) angeordnet ist.

24. Anlage nach einem der Ansprüche 1 bis 23, dadurch gekennzeichnet, daß zur Überwachung der jeweiligen Positionen der Kanten des Trägers (4, 5) ein als beidseitiger Kantenfühler ausgebildeter Tastkopf (92) angeordnet ist.

25. Anlage nach einem der Ansprüche 1 bis 24, dadurch gekennzeichnet, daß seitliche Randabstreifer (79) und eine unterhalb des Trägers angeordnete Rakel bzw. ein Messer (80) zum Abstreifen und Glätten von im Überschuß aufgegebener Beschichtungsmasse vorgesehen sind.

26. Anlage nach einem der Ansprüche 1 bis 25, dadurch gekennzeichnet, daß zwischen der Auffangwanne (10) und der Beschichtungsvorrichtung (22) eine Verbindungsleitung (91) für das Überschußmaterial angeordnet ist.

27. Anlage nach einem der Ansprüche 1 bis 26, dadurch gekennzeichnet, daß sie im Baukastensystem aufgebaut und baukastenmäßig nachrüstbar ist.

28. Anlage nach einem der Ansprüche 1 bis 27, dadurch gekennzeichnet, daß zur Kühlung der Deck- bzw. Beschichtungsmasse außerhalb des Kühlbandes (32) Düsen (44) für zusätzliche Wasserbespülung sowie nachgeordnete Absaughauben (45) mit Ventilatoren (46) zur Absaugung des Wasserdampfes angeordnet sind.

## Claims

1. Installation for applying one or more coats to the top and/or bottom of strips of backing or for manufacturing strips without any backing with, or from, one or more such materials as asphalt, possibly sprinkled with such a material as granulated slate, silica sand, talc, etc. and optionally covered with sheeting or a similar material, characterised by a water-cooled belt (17), by at least one separate coater (9, 22, 23, 35) for the upper and lower surfaces, and by separate sprinklers (12, 25) for sprinkling the coated upper and lower surfaces of the base and featuring devices (13, 26) for suctioning up any dust that occur, whereby at least one additional coater (42) and water-cooled roller (67) is provided for covering with sheeting or similar or for manufacturing strip without a base.

2. Installation according to Claim 1, characterised in that the coaters (9, 22, 23, 35) for the upper and lower surfaces of the base have a replaceable heated doctor (62, 97).

3. Installation according to Claim 1 or 2, characterised in that the coaters (9, 22, 23, 35) have a box (53) for applying coating with a rear wall (54, 99) and side walls (58) that can be displaced to vary and adjust the flow-control gap (56).

4. Installation according to Claim 3, characterised in that the rear wall (54) consists of two transverse walls (59) that telescope together, each one fastened to one of the side walls (58), whereby threaded spindles (61) advance each side wall (58) transversely.

5. Installation according to one of Claims 1 to 4, characterised in that the application box (53) in each coater (9, 22, 23, 35) is heated, whereby in the rear wall (54) elctrical elements (55) are positioned.

6. Installation according to one of Claims 1 to 5, characterised in that the bottom of each coater (9, 22, 35) has a keel (64) made of or coated with low-friction plastic.

7. Installation according to one of Claims 1 to 6, characterised in that the coaters (9, 22, 23, 35) can be raised and lowered.

8. Installation according to one of Claims 1 to 7, characterised in that the coater (42) for covering with sheeting is equipped with an application box (65) with displaceable side walls for the coating and in that the water-cooled roller (67) can be raised and lowered.

9. Installation according to one of Claims 1 to 8, characterised by another water-cooled belt (32) or several water-cooled rollers (33) downstream of the water-cooled belt (17).

10. Installation according to one of Claims 1 to 9, characterised in that the water-cooled belt (17) is suspended on arms (18).

11. Installation according to one of Claims 1 to 10, characterised by, in addition to the sprinklers (12, 25) for the upper and lower surfaces of the base, an edge sprinkler (27) with a vacuum device (29).

12. Installation according to one of Claims 1 to 11, characterised in that the sprinkler (25) that carries out the main sprinkling has at least two variable-slope screens (117, 118) for coarse and fine sprinkling particles, with baffles and channels (119, 120) for directing the components.

13. Installation according to one of Claims 1 to 12, characterised by backing rollers (24, 41) below the coaters (9, 22, 23, 35, 42).

14. Installation according to one of Claims 1 to 13, characterised in that sprays (21, 36) that apply a release agent to the surface of the belts and coolant-application devices, nozzles (73) for example, that cool the belts are associated with the water-cooled belts (17, 32).

15. Installation according to one of Claims 1 to 14, characterised by a deflection roller (37) between the water-cooled belts (17, 32) that has a cold-water bath (38) that can be raised and lowered associated with it.

16. Installation according to one of Claims 1 to 15, characterised by several rubberized compression rollers (30) for forcing the sprinkles into the surface.

17. Installation according to one of Claims 1 to 16, characterised by additional unrolling devices (43, 47, 51, 52, 75, 76) for coating strip, edge strips, sheet, etc.

18. Installation according to one of Claims 1 to 17, characterised in that the coaters (9, 22, 23, 35) can be shifted transversely.

19. Installation according to Claim 18, characterised in that the coaters rest on transverse rails (83, 94).

20. Installation according to one of Claims 1 to 19, characterised in that the coater (22) has a heating roller (98) that can be raised and lowered downstream of the doctor (97).

21. Installation according to one of Claims 1 to 20, characterised in that the heating rollers have a heating pad (101) extending around the inside of their surface (113) and a temperature sensor (105) inside.

22. Installation according to one of Claims 1 to 21, characterised in that water-cooled rollers (67) are double-walled, with an outer surface (87) that is thin and an inner wall (86) that is thick enough to withstand the stress that occurs, and in that the space between the inner wall (86) and the outer surface (87) has sections for the cooling water flow through.

23. Installation according to one of Claims 1 to 22, characterised by a supporting surface (81) with heating elements (93) below the coater (9).

24. Installation according to one of Claims 1 to 23, characterised by a sensor (92) that senses both edges of the base (4, 5) and monitors their position.

25. Installation according to one of Claims 1 to 24, characterised by lateral edge scrapers (79) and a doctor or a blade (80) below the base to scrape off and smooth out the coating, which is applied in excess.

26. Installation according to one of Claims 1 to 25, characterised by a connecting line (91) for excess coating between the collecting tub (10) and the coater (22).

27. Installation according to one of Claims 1 to 26, characterised by being modular and in its modules can be interchanged.

28. Installation according to one of Claims 1 to 27, characterised by nozzles (44) for supplying additional water to cool the coating outside the water-cooled belt (32) and by downstreams hoods (45) with fans (46) for extracting steam.

## Revendications

1. Installation pour l'enduction en couches de revêtement inférieure et/ou supérieure, simple ou multiple, de matériaux de support en forme de bande ou pour la réalisation de bandes sans support avec ou en une ou plusieurs masses de revêtement, telles que bitume, éventuellement avec application d'un matériau dispersé, tel que schiste granulé, sable de quartz, talc, etc., et recouvrement facultatif de films ou similaires, caractérisée par une bande de refroidissement (17) et au moins chaque fois un dispositif d'enduction (9, 22, 23, 35) pour la face inférieure et la face supérieure du support qui sont disposés séparés l'un de l'autre, ainsi que des dispositifs de dispersion (12, 25) séparés pour la face inférieure et la face supérieure enduites du support, avec aspiration (13, 26) pour les poussières qui se produisent, au moins un autre dispositif d'enduction (42) avec cylindre de refroidissement (67) étant prévu pour le revêtement de films ou similaires ou lors de la fabrication de bandes sans support.

2. Installation suivant la revendication 1, caractérisée en ce que les dispositifs d'enduction (9, 22, 23, 35) de la face supérieure et la face inférieure du support présentent un racleur pouvant être chauffé et remplacé (62, 97).

3. Installation suivant la revendication 1 ou 2, caractérisée en ce que le dispositif d'enduction (9, 22, 23, 35) possède un caisson de dépôt (53) de la masse de revêtement dont la paroi arrière (54, 99) et les parois latérales (58) sont déplaçables, afin de permettre la modification et le réglage de l'ouverture de sortie (56).

4. Installation suivant la revendication 3, caractérisée en ce que la paroi arrière (54) se compose de deux parois transversales (59), qui se recouvrent et peuvent se déplacer de manière téléscopique l'une par rapport à l'autre, dont l'une paroi transversale (59) est reliée à l'une des parois latérales (58) et l'autre paroi transversale (59) est reliée à l'autre paroi latérale (58), des tiges filetées (61) s'étendant transversalement étant disposées pour permettre le déplacement correspondant des parois latérales (58).

5. Installation suivant l'une des revendications 1 à 4, caractérisée en ce que le caisson de dépôt (53) des dispositifs d'enduction (9, 22, 23, 35) est chauffé, des éléments chauffants électriques (55) étant placés dans la paroi arrière (54).

6. Installation suivant l'une des revendications 1 à 5, caractérisée en ce que sur la face inférieure du dispositif d'enduction (9, 22, 23, 35) sont disposées des clavettes de baladage (64) en matière plastique glissante ou à revêtement en matière plastique.

7. Installation suivant l'une des revendications 1 à 6, caractérisée en ce que le dispositif d'enduction (9, 22, 23, 35) est réglable en hauteur.

8. Installation suivant l'une des revendications 1 à 7, caractérisée en ce que le dispositif d'enduction (42) pour le revêtement de films est équipé d'un caisson de dépôt (65) de la masse d'enduit pourvu de parois latérales déplaçables et que le cylindre de refroidissement (67) est réglable en hauteur.

9. Installation suivant l'une des revendications 1 à 8, caractérisée en ce qu'après la bande de refroidissement (17) sont disposés une autre bande de refroidissement (32) ou plusieurs cylindres refroidis (33).

10. Installation suivant l'une des revendications 1 à 9, caractérisée en ce que la bande de refroidissement (17) est suspendue à des consoles (18).

11. Installation suivant l'une des revendications 1 à 10, caractérisée en ce que, outre les dispositifs de dispersion (12, 25) pour la face supérieure et la face inférieure du support, il est disposé un dispositif de dispersion de bords (27) auquel est associée une aspiration des bords (29).

12. Installation suivant l'une des revendications 1 à 11, caractérisée en ce que le dispositif de dispersion (25) pour la dispersion principale présente au moins deux tamis de criblage (117, 118) à réglage d'inclinaison pour les gros matériaux de dispersion et les matériaux de dispersion fins, qui sont suivis de déflecteurs et canaux de guidage (119, 120) pour l'alignement des éléments de dispersion.

13. Installation suivant l'une des revendications 1 à 12, caractérisée en ce que sous les dispositifs d'enduction (9, 22, 23, 35, 42) sont disposés des cylindres de support (24, 41).

14. Installation suivant l'une des revendications 1 à 13, caractérisée en ce qu'aux bandes de refroidissement (17, 32) sont associés des dispositifs de pulvérisation (21, 36) pour l'application d'un anti-adhérent sur la surface de bande et des dispositifs à eau de refroidissement, tels que tuyères à eau de refroidissement (73), pour le refroidissement de la bande de refroidissement (17, 32).

15. Installation suivant l'une des revendications 1 à 14, caractérisée en ce qu'entre les bandes de refroidissement (17, 32) est disposé un cylindre de renvoi (37) auquel est associé un bain d'eau de refroidissement (38) réglable en hauteur.

16. Installation suivant l'une des revendications 1 à 15, caractérisée par plusieurs cylindres de compression caoutchoutés (30) destinés à comprimer les matériaux de dispersion.

17. Installation suivant l'une des revendications 1 à 16, caractérisée par des dispositifs supplémentaires (43, 47, 51, 52, 75, 76) de déroulement de bandes de revêtement, bandes de bordure, films, etc.

18. Installation suivant l'une des revendications 1 à 17, caractérisée en ce que les dispositifs d'enduction (9, 22, 23, 35) sont déplaçables dans le sens transversal.

19. Installation suivant la revendication 18, caractérisée en ce que les dispositifs d'enduction s'appuient sur des rails (83, 94) s'étendant transversalement.

20. Installation suivant l'une des revendications 1 à 19, caractérisée en ce que le dispositif d'enduction (22) présente un cylindre chauffant (98), disposé après le racleur (97), qui est réglable en hauteur.

21. Installation suivant l'une des revendications 1 à 20, caractérisée en ce que les cylindres chauffants présentent un tapis chauffant (101) disposé tout autour à l'intérieur de l'enveloppe de cylindre (113) ainsi qu'une sonde pyrométrique (105) disposée à l'intérieur du cylindre.

22. Installation suivant l'une des revendications 1 à 21, caractérisée en ce que les cylindres de refroidissement (67) présentent deux enveloppes (86, 87) situées coaxialement l'une par rapport à l'autre, dont l'enveloppe située à l'extérieur (87) est réalisée à paroi de faible épaisseur, tandis que l'enveloppe intérieure (86) absorbant les efforts de sollicitation est à paroi plus épaisse, et en ce que dans l'espace annulaire entre les enveloppes (86, 87) sont disposées des sections pour l'eau de refroidissement.

23. Installation suivant l'une des revendications 1 à 22, caractérisée en ce que sous le poste d'enduction (9) est disposée une table d'appui (81) à éléments chauffants (93).

24. Installation suivant l'une des revendications 1 à 23, caractérisée en ce qu'il est disposé un détecteur (92), qui se présente sous forme de détecteur de bord des deux côtés, destiné à surveiller les positions momentanées des bords du support (4, 5).

25. Installation suivant l'une des revendications 1 à 24, caractérisée en ce qu'il est prévu des racleurs de bord (79) latéraux et un racleur, ou une lame, (80) disposé sous le support, destinés à racler et à égaliser la masse d'enduit déposée en excès.

26. Installation suivant l'une des revendications 1 à 25, caractérisée en ce qu'entre la cuve de réception (10) et le dispositif d'enduction (22) est disposé un conduit de communication (91) pour les matériaux excédentaires.

27. Installation suivant l'une des revendications 1 à 26, caractérisée en ce qu'elle est construite suivant le système modulaire et qu'elle peut être équipée ultérieurement de manière modulaire.

28. Installation suivant l'une des revendications 1 à 27, caractérisée en ce que pour le refroidissement de la masse de revêtement ou d'enduction, il est disposé, en-dehors de la bande de refroidissement (32), des tuyères (44) destinées à un arrosage d'eau supplémentaire ainsi que des hottes d'aspiration (45) à ventilateurs (46) disposées après ces tuyères et destinées à aspirer la vapeur d'eau.
